# EUROPEAN PATENT APPLICATION

(11) **EP 4 089 579 A1**
(43) Date of publication of application: **16.11.2022**
(21) Application number: 21186618.1
(22) Date of filing: 20.07.2021
(51) Int. Cl.: G06K 9/62, G06V 10/75

(54) **METHOD FOR COMPARING DIGITAL IMAGES, IN PARTICULAR FOR EVALUATING ART WORKS**

(30) Priority: 12.05.2021 IT 202100012143
(71) Applicant: Speakart S.r.l., 30173 Venezia (VE) (IT)
(72) Inventor: MARITAN, Angelica, 30172 Venezia (VE) (IT)
(74) Representative: Gallo, Luca

(57) **Abstract**

Method for executing the comparison of digital images, in particular of works of art, which provides for a step of loading a primary image (IP) in a database (4), and a step of acquiring a secondary image (IS) by means of the acquisition of a photograph made with a digital shooting device (5). The method also comprises an analysis step, in which a computer (2) calculates given graphical parameters of the primary image (IP) and of the secondary image (IS), and a normalization step, in which the computer (2) processes the secondary image (IS), generating a transformed image (IT) in which the values of the graphical parameters are normalized with respect to the values of the graphical parameters of the primary image (IP). Then, the method comprises an alignment step, in which the computer (2) identifies, in the primary image (IP) and in the transformed image (IT), corresponding markers (M1, M2), and a superimposition step, in which the images (IP, IT) are superimposed, making the corresponding markers (M1, M2) coincide. The method finally provides for a step of comparing the superimposed images (IP, IT) in order to identify possible differences thereof.

## Description

### Field of application

The present invention refers to a method for comparing digital images, in particular for evaluating art works.

The present method is inserted in the field of art works and, in particular, in the field of the art market.

Advantageously, the present method is intended to be employed for developing and managing digital archives containing images of works of art which allow, by means of the use of images contained therein, to execute specific evaluations of such works of art, such as the state of preservation, possible alterations of the work, the authenticity of the same, etc.

In particular, the present method allows comparing a primary image of each work of art contained in the archive with subsequent photographs of the work, in order to verify for example if the work of art depicted in the latter photographs presents variations with respect to the primary image which can be indicative of alterations, forgery, etc.

### State of the art

There is the particular need in the field of the art work market to organize and retrieve - in a safe and reliable manner - multiple information relative to each work of art, for example so as to make it easily available to the reference users. On such matter, digital archives are known which allow storing and cataloguing at their interior a great quantity of works of art, associating with each a photograph and further characteristics relative for example to the author, to the owner, to the collection, etc.

It is however increasingly necessary to be able to evaluate and verify specific characteristics of each work of art, relative for example to the state of preservation, to possible damage sustained or to the authenticity.

For such purpose, computerized methods are known which allow comparing the images of the digital archives with further photographs of the work of art that were subsequently taken, for example by means of a digital camera or a smartphone, and of detecting possible differences which allow determining if the work illustrated in the later photograph is authentic.

For example, the Chinese patent application CN 108288012 describes a method for verifying the authenticity of a work of art, which provides for storing, in a server, an archive containing - for each work of art - basic information such as the name and date of completion, documents that attest the authenticity of the work, and a high-definition image of the work.

In particular, the method provides for processing the image stored in order to identify, within the latter, a set of areas of the work with 1:1 aspect ratio, in a manner such to obtain a map of local characteristics.

The method allows comparing the archived image of each work of art with second images of the work acquired subsequently, in particular by means of a smartphone, which acquires the digital image and sends it to the server of the archive. In order to execute the comparison, the server has installed a processing program that sequentially executes three comparison algorithms. More in detail, the program executes a first rough comparison algorithm, in which a map of local characteristics is extracted from the second image corresponding to that of the image of the archive; hence, these two maps are compared with each other. If from the comparison executed by this first algorithm the images are judged to be different, the program terminates, judging the work of the second image to be non-authentic. Otherwise, if the images are judged to be sufficiently similar, the program executes a second comparison algorithm by means of calculation of the Hamming distance between the Hash numbers of the two images. If from the comparison executed by this second algorithm, the images are judged to be different, the program terminates, judging the work of the second image to be non-authentic. Otherwise if also in this case the images are judged to be sufficiently similar, the method executes a third precise comparison algorithm between the two images by means of SIFT algorithm (comparison carried out pixel by pixel). If from the comparison executed by this third algorithm the images are judged to be different, the program judges the work of the second image to be non-authentic, otherwise if the images are judged to be equivalent, the program produces an outcome of authenticity of the work represented in the second image.

The methods of the type briefly mentioned above have however shown that they do not lack drawbacks.

A first drawback is tied to the fact that the comparison between the archive image and the subsequent photograph to be analyzed can be subjected to different factors which could alter the result thereof, towards an incorrect judgment on the authenticity of the work. The appearance of the work of the second photograph can be conditioned by the photographic optics, by the ambient light conditions, by the shooting angle, i.e. the same work of art, with the passing of time, can be subjected to changes with respect to the time when the photograph of the image in the archive was taken. Such factors can lead to false negatives of the result of the comparison program or not allow the execution of the comparison between the images.

In addition, the above-described methods of known type are unable to provide further information beyond the authenticity of the work, for example relative to the state of preservation of the latter.

### Presentation of the invention

The main object of the present invention is therefore that of overcoming the drawbacks shown by the solutions of known type, by providing a method for executing the comparison of digital images, in particular of works of art, which is entirely efficient in operation and which, in particular, is able to execute a correct comparison between the images even in the presence of possible optical artifacts present in the image to be evaluated.

Another object of the present invention is to provide a method for executing the comparison of digital images which allows providing results that are particular reliable.

Another object of the present invention is to provide a method for executing the comparison of digital images which can be used in a simple and quick manner by the user.

Another object of the present invention is to provide a method for executing the comparison of digital photographs which allows obtaining important information with regard to the authenticity, damage, decay of the work of art.

### Brief description of the drawings

The technical characteristics of the invention, according to the aforesaid objects, can be clearly seen in the content of the below-reported claims and the advantages thereof will be more evident in the following detailed description, made with reference to the enclosed drawings, which represent a merely exemplifying and non-limiting embodiment of the invention, in which:
- figure 1 shows, in a schematic manner, a system by means of which the present method for comparing digital images is implemented;
- figure 2 shows two images to be compared by means of the present method, including a primary image (of a database) and a secondary image as acquired;
- figure 3 shows the aforesaid primary image and a transformed image obtained from the secondary image following a normalization step of the present method;
- figure 4 shows the primary image and the transformed image, in which corresponding markers were identified following an alignment step of the present method;
- figure 5 shows, in a representative manner, the superimposition of the primary image and of the transformed image by means of superimposition of the corresponding markers;
- figure 6 shows an example of a result obtained from a comparison step of the present method.

### Detailed description of a preferred embodiment

The present method for comparing digital images is intended to be advantageously employed in the field of art works, in particular in the art market, in order to execute specific evaluations of the works of art, for example relative to the state of preservation, to possible alterations of the work (such as damage or natural decay), to the authenticity of the work itself, etc.

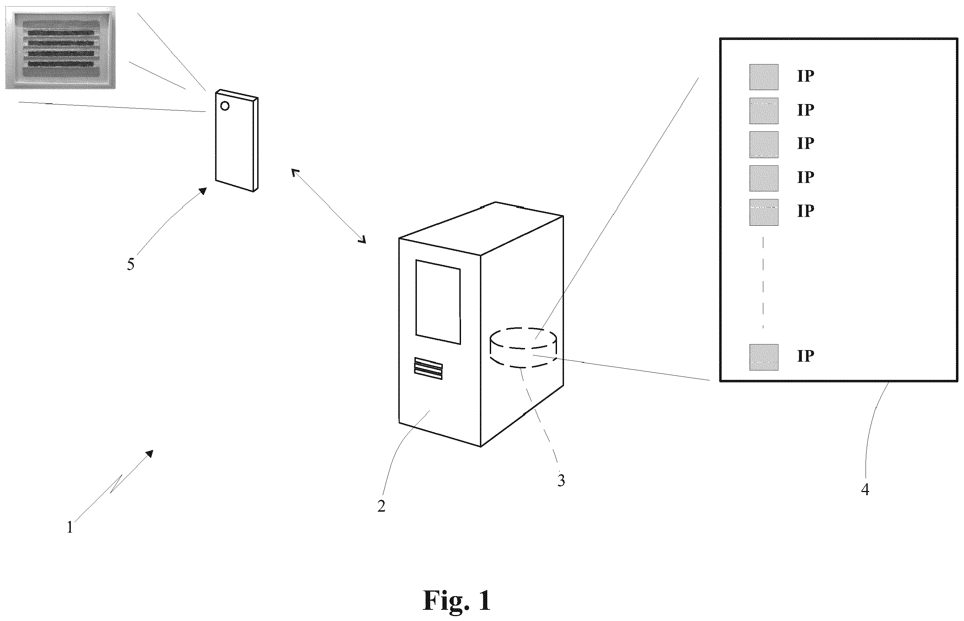

Figure 1 shows, in a schematic manner, an example of a computer system 1 by means of which the present method can be implemented.

Such computer system 1 comprises a computer 2, in which one or more programs are advantageously installed which are adapted to execute the processing and control operations in order to implement the operating steps of the present method (discussed hereinbelow).

In particular, the computer 2 is provided with a data memory 3 in which at least one database 4 is stored which contains the images (hereinbelow termed primary images IP) of the works of art, preferably organized in catalogues, for example by artist, owner, collection, etc.

In particular, the primary image IP of each work of art is obtained by means of a digital photograph which reproduces such work of art, and it is loaded (e.g. by the owner) into the database 4, preferably with further accessory identification information associated therewith.

The computer system 1 also comprises a shooting device 5, which is arranged for taking digital photographs, and can for example comprise a digital camera. In particular, the shooting device 5 can be a smartphone or a tablet.

The shooting device 5, therefore, is employable for taking a new photograph of a work of art (whose primary image IP has already been archived in the database 4) and which therefore is representative of the state of the work of art at a time after that when the primary image IP was executed, for example after an exhibition, a loan or a movement of the work of art.

This new photograph (hereinbelow indicated as secondary image IS) is processed by the computer 2 in order to execute the comparison with the primary image IP, as discussed in detail hereinbelow.

Advantageously, the computer 2 comprises a computer (in particular a server) capable of acquiring the secondary images IS in order to execute the comparison thereof with the primary images IP.

Optionally, the computer 2 can comprise multiple computers or hardware systems and in particular can be integrated (even only partially) in the shooting device 5, as in the microprocessor of a smartphone. For example, the computer 2 can comprise a remote server in which the database 4 is stored, while the program that executes the processing of the images can be installed in the server itself or in a processor of the shooting device (for example in the microprocessor of a smartphone).

According to the present invention, the present method comprises a step of loading a primary image IP, in digital format, into the database 4. Such primary image IP can be obtained from a photograph of a work of art and it can be loaded into the database 4, storing such photograph in the data memory 3 of the computer 2, for example at the time of insertion of the work of art in a corresponding catalogue.

As indicated above, the primary image IP will constitute a reference image of the work of art for comparisons with subsequent photographs of such work of art, so as to evaluate possible differences in order to detect, for example, variations of the latter or the authenticity of the work represented in such subsequent photographs.

For such purpose, the present method comprises a step of acquiring a secondary image IS, in digital format, by means of the acquisition of at least one photograph made with the shooting device 5.

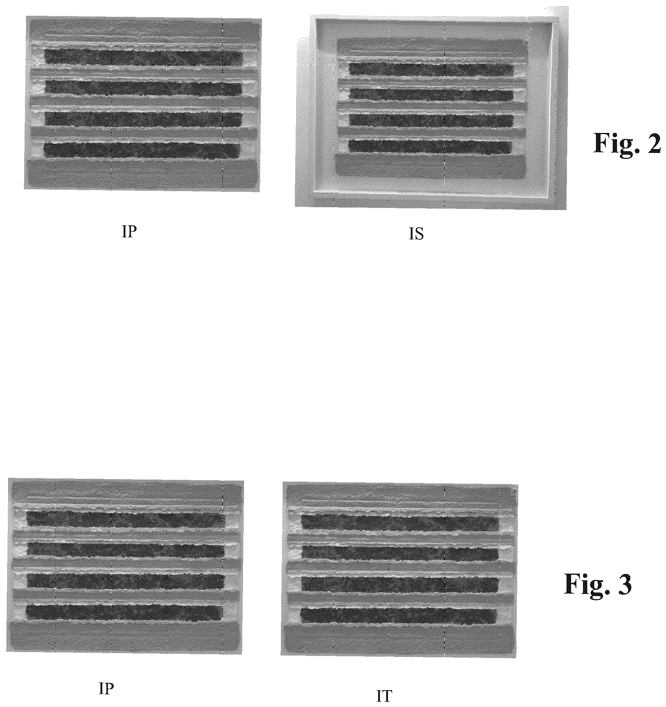

A merely exemplifying example of a primary image IP and of a secondary image IS is shown in figure 2.

The secondary image IS is acquired from the computer 2 in order to execute the subsequent operating steps of the present method.

For such purpose, for example, if the processing of the images is executed on a remote server, the secondary image IS can be sent to the latter by means of Internet network, or, if the processing of the images is executed locally in the shooting device 5, the image is simply acquired by the processor of the latter (which in part forms the computer 2).

Then, an analysis step is provided, in which the computer 2 calculates given graphical parameters of the primary image IP and of the secondary image IS, which are representative of given characteristics of these digital images IP, IS. More in detail, such graphical parameters are selected from the group comprising: number of pixels, variants of dynamic color gamut, arrangement of the color gamut, recognized solid shapes (e.g. polygons), etc.

Advantageously, in the aforesaid analysis step, the computer 2 compares the number of pixels of the primary image IP with the number of pixels of the secondary image IS, and enables the execution of a subsequent normalization step (described hereinbelow) only if the number of pixels of the secondary image IS is greater than or equal to the number of pixels of the primary image IP. Indeed, with such condition it is possible to execute given operations of transformation of the secondary image IS which render it particularly suitable for the subsequent operations.

Advantageously, the computer 2 calculates the values of the variation of the dynamic color gamut and of the arrangement of the color gamut of the primary image IP and of the secondary image IS, so as to detect possible differences between the values of such parameters of the two images IP, IS.

Preferably, the computer 2 executes an operation of recognition of the shapes in order to detect the presence of solid shapes (in particular polygons) present in both the images IP, IS.

After the analysis step, the method provides for a normalization step, in which the computer 2 processes the secondary image IS, generating a transformed image IT, in which the values of the graphical parameters are normalized with respect to the values of the graphical parameters of the primary image IP. An example of a normalized image is illustrated in figure 3.

In particular, the normalization step allows attenuating possible differences between the primary IP and secondary IS images due to different conditions in which the respective photographs (ambient light, camera characteristics, etc.) were executed, as well as advantageously to make given graphical characteristics (color gamut, tone, contrast, etc.) uniform, which allow identifying given key points in the images in the subsequent operating steps of the method. Advantageously, in the normalization step, the computer 2 generates the transformed image IT by applying, to the secondary image IS, a color gamut transformation function, in particular on the 3D color spectrum, in a manner such that the interval of the values of color gamut, tone, contrast of the transformed image IT are normalized with respect to the interval of those of the primary image IP.

Preferably, in the normalization step, the computer 2 generates the transformed image IT by applying, to the secondary image IS, a spatial normalization function, in particular in a manner such to normalize the transformed image IT and the primary image IP in a common space, also possibly by applying a trimming operation on the secondary image IS.

Advantageously, in the normalization step, the primary image IP and the transformed image IT are converted into a re-processed image, in a manner such to be able to reconstruct the objects of the images to be aligned.

According to the present invention, the present method comprises an alignment step for aligning the transformed image IT with respect to the primary image IP, so as to be able to superimpose them in an optimized manner, in order to detect the differences between such images IT, IP.

In the alignment step, the computer 2 identifies, by means of an algorithm for recognizing characteristics, multiple key points in the primary image IP and associates, with such key points, corresponding first markers M1. Advantageously, the computer 2 identifies the aforesaid key points of the primary image IP by means of functions for recognizing local differences in the primary image IP.

In particular, such recognition functions identify, in a given local neighborhood of each pixel of the primary image IP, discrimination parameters selected for example from among: differences of contrast, differences of color, lines, contours, etc.

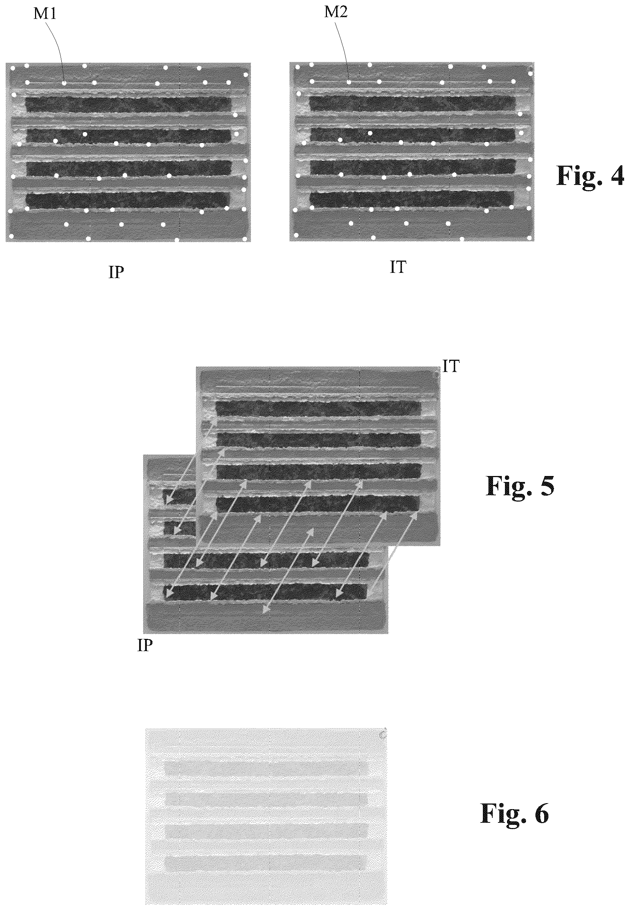

Subsequently, the computer 2 searches, in the transformed image IT, key points corresponding to those identified in the primary image IP and associates, with the key points in the transformed image IT, corresponding second markers M2. Advantageously, the key points of the transformed image IT are identified by means of the aforesaid recognition functions employed in the primary image IP. One example of the primary image IP and transformed image IT, with the corresponding markers M1, M2 indicated, is illustrated in figure 4.

The determination of the first and second markers M1, M2 allows identifying, in the primary image IP and in the transformed image IT, specific corresponding elements which are made to coincide in order to precisely superimpose the two images IP, IT, in particular in a manner such to compensate for possible distortions present in the secondary image IS (and hence in the transformed image IT) due for example to the shooting angle for the photograph or to different characteristics of the optics of the shooting device 5.

After the normalization step, the present method comprises a superimposition step, in which the computer 2 superimposes the transformed image IT on the primary image IP, making the second markers M2 of the transformed image IT coincide with the corresponding first markers M1 of the primary image IP. Advantageously, in order to superimpose the first and the second markers M1, M2, the computer 2 subjects the transformed image IT to geometric deformation functions, such as rotation, polynomial deformations, etc.

In this manner, by means of the aforesaid steps of normalization, of alignment and of superimposition, the secondary image IS and the primary image IP are recorded one with respect to the other, in a manner such to render them as superimposable as possible.

Such condition allows executing the subsequent comparison step of the present method, ensuring that the possible differences identified are not caused by optical artifacts present in the secondary image IS due to the ambient shooting conditions for the photograph and/or to the optics of the shooting device.

In the comparison step, the computer 2 compares the superimposed images (transformed IT and primary IP), in a manner such to detect possible differences of the representation of the work of art in the two images IP, IT. Advantageously, in the comparison step, the computer executes one or more of the comparison functions, such comparison pixel by pixel over the absolute values of the single pixels, a comparison based on a structural similarity index, a comparison following arithmetic operations on the single channels.

An example of a result of the comparison step is illustrated in figure 6.

The invention thus described therefore attains the pre-established objects.

## Claims

1. Method for executing the comparison of digital images, in particular of works of art, said method comprising:
- a step of loading a primary image (IP), in digital format, in at least one database (4);
- a step of acquiring a secondary image (IS), in digital format, by means of the acquisition of at least one photograph made with a digital shooting device (5);
- an analysis step, in which a computer (2) calculates given graphical parameters of said primary image (IP) and of said secondary image (IS), said graphical parameters being selected at least from the group comprising: number of pixels, variants of dynamic color gamut, arrangement of the color gamut, recognized solid shapes;
- a normalization step, in which said computer (2) processes said secondary image (IS), generating a transformed image (IT), in which the values of said graphical parameters are normalized with respect to the values of the graphical parameters of said primary image (IP);
- an alignment step, in which said computer (2):
- identifies, by means of an algorithm for recognizing characteristics, multiple key points in said primary image (IP) and associates said key points with corresponding first markers (M1);
- searches, in said transformed image (IT), for said key points identified in said primary image (IP) and associates key points in said secondary image (IS) with corresponding second markers (M2);
- a superimposition step, in which said computer (2) superimposes said transformed image (IT) on said primary image (IP), arranging said second markers (M2) at corresponding said first markers (M1);
- a comparison step, in which said computer (2) compares said superimposed primary (IP) and transformed (IT) images.

2. Method according to claim 1, **characterized in that**, in said analysis step, said computer (2) compares the number of pixels of said primary image (IP) with the number of pixels of said secondary image (IS);
wherein said computer (2) executes said normalization step only if the number of pixels of said secondary image (IS) is greater than or equal to the number of pixels of said primary image (IP).

3. Method according to claim 1 or 2, **characterized in that**, in said normalization step, said primary image (IP) and said transformed image (IT) are converted into a re-processed image.

4. Method according to any one of the preceding claims, **characterized in that**, in said normalization step, said computer (2) generates said transformed image (IT) by applying, on said secondary image (IS), at least one color gamut transformation function.

5. Method according to any one of the preceding claims, **characterized in that**, in said normalization step, said computer (2) generates said transformed image (IT) by means of applying to said secondary image (IS) at least one spatial normalization function.

6. Method according to any one of the preceding claims, **characterized in that**, in said alignment step, said computer (2) identifies said key points by means of functions for recognizing local differences in said primary image (IP).

7. Method according to any one of the preceding claims, **characterized in that** said recognition functions identify, in a given local neighborhood of each pixel of said primary image (IP), discrimination parameters selected at least in the group comprising: differences of contrast, differences of color, lines, contours.

8. Method according to any one of the preceding claims, **characterized in that**, in said comparison step, said computer (2) executes one or more of at least the following comparison functions: a pixel by pixel comparison on the absolute values of the single pixels, a comparison based on a structural similarity index, a comparison following arithmetic operations on the single channels.
